# FASCICULE DE BREVET EUROPEEN

(11) **EP 0 994 308 B1**
(45) Date de publication et mention de la délivrance du brevet: **12.05.2004**
(21) Numéro de dépôt: 99430025.9
(22) Date de dépôt: 13.10.1999
(51) Int. Cl.: F24C 7/04, F24D 13/02

(54) **Panneau chauffant injecté, composition, dispositif et procédé pour sa fabrication**
Spritzgegossene Heizungsplatte, Zusammensetzung, Vorrichtung und Verfahren zu Herstellung
Injection molded heating panel,composition,device and method of manufacturing

(30) Priorité: 14.10.1998 FR 9813083
(43) Date de publication de la demande: 19.04.2000
(73) Titulaire: G.C. Technology, 13854 Aix-en-Provence (FR)
(72) Inventeur: Loric, Martial, 13770 Venelles (FR); Gerard, Vincent, Domaine de Calas, 13480 Calas (FR)
(74) Mandataire: Domange, Maxime

(56) Documents cités:
- EP-A- 0 785 403
- FR-A- 2 117 535
- GB-A- 2 265 211
- PATENT ABSTRACTS OF JAPAN vol. 014, no. 033 (M-923), 22 janvier 1990 (1990-01-22) & JP 01 269839 A (EIDAI CO LTD), 27 octobre 1989 (1989-10-27)

## Description

La présente invention est relative à une plaque ou panneau chauffant, injecté, à une composition pour sa fabrication, ainsi qu'à un procédé et à un dispositif permettant sa fabrication.

Le domaine technique de l'invention est celui de la fabrication de panneaux chauffants moulés par injection basse pression.

Dans la présente demande, les termes "plaque" et "panneau" sont utilisés indifféremment pour désigner un élément généralement plein, peu épais et rigide, qui est plan ou gauche (non plan).

La présente invention est plus particulièrement relative à l'obtention de panneaux chauffants pour le chauffage électrique (par résistance ohmique) de locaux à usage d'habitation ou de bureau, mais elle peut éventuellement s'appliquer à d'autres types de panneaux chauffants à résistance, tels que des chauffe-plats par exemple.

L'objectif général poursuivi par la présente invention est de permettre d'obtenir à moindre coût un panneau chauffant esthétique et performant.

La demande de brevet FR 2.723.432 décrit un panneau chauffant obtenu par moulage d'un matériau constitué d'un mélange de ciment et de pierre concassée ; la face arrière du panneau comporte une gorge dans laquelle est scellé un câble chauffant qui est recouvert du matériau constituant le panneau ; ce matériau ne permet pas de fabriquer un panneau qui soit mince et solide la porosité et la rugosité de ce matériau rendent difficiles une coloration autre que celle due au matériau lui-même ; le positionnement de l'élément chauffant en face arrière nécessite de maintenir cet élément chauffant à une température très élevée pour obtenir une température (de peau) en face avant du panneau, qui soit suffisante pour chauffer par cette face l'air ou le local contenant le panneau il en résulte une température élevée en face arrière et un dégagement important de chaleur par cette face, qui devrait être évité ; ces températures élevées sont susceptibles de provoquer un vieillissement rapide de l'élément chauffant et du panneau ; à ces inconvénients, s'ajoutent ceux liés à la difficulté d'assurer le maintien au cours du temps d'un contact thermique efficace et uniforme entre l'élément chauffant et le panneau, sur toute la surface de l'élément chauffant, afin notamment d'éviter la formation de zones ou "points" chaud(e)s et d'assurer un rendement correct.

La demande de brevet FR 2.004.345 décrit une pièce moulée à chauffage électrique constituée par des couches stratifiées un inconvénient important du procédé de moulage résulte de la pression élevée (100 à 120 kg/cm²) qui, pour réaliser des pièces de grandes dimensions, peut nécessiter l'usage d'une presse de mille tonnes ou plus, et nécessiter l'usage de moules très robustes et donc très coûteux.

La demande de brevet GB-A-2,265,211 décrit un panneau chauffant dont l'élément chauffant constitué par un fil conformé en serpentin est noyé dans une matrice ignifuge constituée d'un mélange de sable, de ciment et de polymères des bornes supportant le fil chauffant sont noyées dans cette matrice qui est entouré d'une coque en résine polyester chargée de fibre de verre elle-même revêtue d'un gel-coat ; la fabrication est effectuée dans un moule ouvert par application des couches successives ce procédé artisanal aboutit nécessairement à un produit coûteux et de qualité variable selon les conditions de mise en oeuvre la structure stratifiée hétérogène (comportant plusieurs couches de constitution différentes) est incompatible avec une diffusion homogène de l'énergie dissipée par le fil chauffant, et est sujette à un vieillissement prématuré sous l'effet des efforts résultant de la dilatation thermique.

On connaît dans EP-A-785403 un procédé de fabrication d'un panneau chauffant à l'air libre dans un moule qui n'est pas fermé

Un objectif de l'invention est de proposer une composition, un procédé et un dispositif de fabrication de panneaux chauffants à partir de cette composition, qui permettent la réalisation de panneaux rigides, minces, c'est-à-dire d'épaisseur de l'ordre de un à trois centimètres, de grandes dimensions, c'est-à-dire dont la surface de la face avant peut atteindre et excéder un mètre carré, en particulier de panneaux de forme gauche.

Un objectif de l'invention est de remédier en partie au moins, aux inconvénients des panneaux chauffants et de leurs procédés d'obtention existants.

La présente invention fournit un procédé de fabrication par moulage d'un panneau chauffant selon l'une des revendications 1 à 7, ainsi qu'un dispositif de fabrication par injection sous pression d'un panneau chauffant comportant un élément chauffant et un support de cet élément qui se noyait dans le panneau selon la revendication 8 ainsi qu'un panneau chauffant moulé comportant un élément chauffant et un support d'élément chauffant qui sont noyés à l'intérieur du panneau, selon l'une des revendications 9 à 14, ainsi qu'un kit comportant un panneau chauffant selon la revendication 15.

Selon un premier aspect, l'invention consiste à utiliser, pour le moulage sous pression (par injection basse pression) d'un panneau chauffant comportant un élément chauffant noyé dans la masse, une composition essentiellement constituée d'une résine thermodurcissable et d'une charge minérale sous forme de poudre.

Il a été constaté que de façon surprenante, il est possible d'obtenir à partir de cette composition un panneau suffisamment solide, alors que les résines thermodurcissables nécessitent généralement l'usage d'une charge fibreuse, telles que des fibres de verre, pour obtenir une résistance mécanique satisfaisante.

On choisit de préférence une résine thermodurcissable, dont la température de vitrification est supérieure à la température (en fonctionnement) des parties les plus chaudes du panneau, c'est-à-dire supérieure à 100°C, en particulier s'étendant dans une plage allant de 120 à 160°C.

On choisit de préférence une résine dont la viscosité soit suffisamment faible pour permettre d'obtenir, après mélange avec la poudre minérale dont la proportion est de préférence supérieure à celle de la résine, une composition dont la viscosité ne soit pas trop élevée, pour faciliter l'utilisation de la composition, notamment son transfert dans un moule.

L'ajout (à l'entrée dans le moule) d'un catalyseur ou d'un durcisseur de polymérisation permet la solidification de la composition à une pression basse, de préférence inférieure à 10⁶ Pascal, en particulier de l'ordre de 1,5 x 10⁵ à 5 x 10⁵ Pascal (pression absolue), et à une température peu élevée, de préférence inférieure à 50°C, en particulier de l'ordre de 15 à 45°C, et ceci en quelques minutes seulement ; on évite ainsi l'emploi d'une presse, et on peut réaliser un moule peu coûteux, par exemple à base d'une structure en matière plastique renforcée par des longerons métalliques, ne nécessitant pas de moyens intégrés de chauffage les parties internes des parois du moule, qui définissent la géométrie du panneau moulé, peuvent être réalisées à moindre coût tout en permettant d'obtenir des formes courbes, complexes et précises ; on peut ainsi obtenir un panneau aux formes galbées, sans angle vif.

La composition selon l'invention présente de préférence les caractéristiques suivantes :
- la proportion en masse de poudre minérale dans la composition est supérieure à 50% et inférieure à 90%, en particulier voisine de 65 à 85%, et la proportion en masse de la résine est supérieure à 10% et inférieure à 50%, en particulier voisine de 15 à 35% ; ces proportions permettent en effet d'obtenir à la fois une viscosité du mélange compatible avec une injection très facile, une conductivité thermique du panneau obtenu qui est optimisée, permettent de limiter le caractère exothermique de la polymérisation dans le moule, et permettent d'obtenir une résistance mécanique à chaud du panneau qui soit suffisante elles permettent en outre d'éviter les phénomènes de sédimentation de la poudre dans le mélange, lors du transfert dans le moule, lesquels phénomènes sont susceptibles de provoquer des hétérogénéités dans le panneau et des retraits différentiels résultant en des déformations de la peau du panneau obtenu, qui sont préjudiciables à son aspect esthétique ;
- une résine polyester pure maléique donne de bons résultats ; pour la réalisation de panneaux de surface de l'ordre de 0,3 à 1,5 m², on choisit de préférence une résine hybride à base d'acide maléique, pour améliorer la tenue mécanique du panneau obtenu et pour faciliter sa mise en oeuvre, en particulier une résine maléique diluée au styrène ; la granulométrie de la poudre de particules minérales est de préférence telle que la dimension moyenne des particules soit inférieure à 200 microns, en particulier située dans une plage allant de 10 à 100 microns les résultats sont améliorés en utilisant une poudre dont le spectre des dimensions d'un échantillon soit "étalé" ; à cet effet, on peut utiliser un mélange de particules de différentes granulométries : des particules de granulométrie de l'ordre de 5 microns sont mélangées avec des particules de granulométrie allant jusqu'à 500 microns ; l'utilisation d'une poudre de calcaire ou de carbonate de calcium donne de bons résultats et permet d'obtenir une composition peu coûteuse ; en variante, on peut utiliser du trihydrate d'alumine ;
- à ces deux composants principaux, on ajoute un agent catalyseur ou durcisseur, un agent de protection contre les ultraviolets, ces agents représentant généralement moins de 2 % en masse de la composition ; un agent de pigmentation peut être ajouté (par exemple oxyde de titane).

Selon un aspect, l'invention propose un procédé d'injection basse pression d'un panneau chauffant dans lequel, successivement :
- on dispose au moins un élément chauffant à l'intérieur d'un moule, on le fixe à au moins une paroi du moule par l'intermédiaire d'au moins un support d'élément chauffant, et on tend l'élément chauffant de façon à ce que celui-ci ne vienne pas en contact avec les parois du moule lors de la coulée et qu'il ne se déforme ni ne se déplace lors de l'injection,
- on ferme le moule que l'on verrouille en position de fermeture,
- on introduit dans le moule une composition selon l'invention, incluant un catalyseur ou durcisseur.

On obtient, après solidification et démoulage, un panneau sensiblement plat dans la matière (c'est-à-dire dans la masse) duquel sont noyés l'élément chauffant et son support.

Grâce au fait que l'on fixe et que l'on tend l'élément chauffant pour éviter qu'il ne touche les parois du moule, l'élément chauffant n'est ni saillant ni affleurant sur les faces externes du panneau obtenu, ce qui permet d'éviter les phénomènes de dilatation différentielle d'une partie à l'autre du panneau et permet d'éviter (en fonctionnement) l'apparition de points chauds.

Notamment lorsqu'on utilise une résine diluée au styrène, il est souhaitable d'éliminer le styrène résiduel après démoulage de préférence, par étuvage du panneau, à une température au moins égale à la température de vitrification de la résine.

Selon un autre aspect, l'invention consiste à utiliser, en tant qu'élément chauffant noyé dans un béton de résine injecté sous pression pour former un panneau chauffant mince, un tronçon de fil électriquement conducteur (fil résistif chauffant) ; ceci facilite la réalisation de panneaux chauffants de grandes dimensions, d'épaisseur faible et sensiblement constante (uniforme), en particulier pour de tels panneaux dont la face avant et la face arrière, parallèle à la face avant, sont incurvées ou gauches, malgré les difficultés inhérentes à la flexibilité d'un fil, qui rendent délicates sa manipulation et son positionnement précis et stable pendant l'opération de moulage, à l'intérieur du moule, à distance (en particulier à égale distance) des parois principales du moule.

L'utilisation d'un fil permet en outre d'éviter de piéger des bulles d'air dans le moule fermé et facilite le remplissage du moule à basse pression.

De préférence le tronçon de fil est conformé, à l'intérieur du moule et par conséquent à l'intérieur du panneau, en une pluralité de portions rectilignes, sensiblement parallèles entre elles, reliées par des portions coudées à 180° pour former un genre de serpentin en zigzag.

Selon une caractéristique de l'invention, on utilise, pour disposer et maintenir le (les) tronçon(s) de fil à l'intérieur du moule, au moins un (et de préférence au moins deux) support(s) ou barrette(s) allongée(s) muni(s) d'une pluralité d'organes de guidage, de positionnement et/ou d'espacement et de support du fil, qui sont sensiblement régulièrement espacés le long du support allongé, ledit support allongé formant de préférence un genre de peigne dont les encoches servent au guidage du fil ; pour la réalisation d'un panneau incurvé on utilise de préférence deux barrettes similaires dont le profil longitudinal incurvé est adapté au profil incurvé du panneau chauffant, que l'on dispose et que l'on fixe à proximité immédiate de deux extrémités opposées du moule, en particulier dans deux plans parallèles qui sont perpendiculaires à l'axe longitudinal du moule; chaque barrette comporte une pluralité de rainures de guidage de fil conducteur, et est fixée à une paroi principale (ou bien latérale) du moule, de façon à s'étendre à distance des deux parois principales du moule, par l'intermédiaire de moyens de fixation réglables ; le (ou les) tronçon(s) de fil électriquement résistif est engagé dans les rainures des barrettes, est conformé à 180° entre deux rainures successives de chaque barrette, le cas échéant légèrement tendu, et ses deux extrémités sont fixées à un moyen d'attache prévu dans le moule, le fil s'étendant alors en zigzag entre les deux barrettes allongées qui sont parallèles entre elles les portions rectilignes du tronçon de fil en serpentin s'étendant entre les deux barrettes, l'éloignement relatif des deux barrettes permet alors d'appliquer au tronçon de fil chauffant conformé en serpentin, une tension mécanique supplémentaire.

L'utilisation d'un fil chauffant de petit diamètre conformé en serpentin et dont les portions rectilignes sont distantes d'un pas dont la valeur est du même ordre de grandeur (c'est-à-dire dans un rapport allant de 0,5 à 2) que l'épaisseur du panneau, permet une répartition homogène dans tout le volume du panneau du flux énergétique dissipé par le fil, et permet d'éviter les points chauds ; on choisit de préférence un fil en alliage de fer, chrome et aluminium ou bien en alliage de nickel et de chrome, d'un diamètre allant de 0,1 à 0,8 mm, en particulier de 0,1 à 0,5 mm, le cas échéant entouré d'une gaine en matière plastique telle que du silicone ; le faible diamètre du fil facilite son coudage à 90° pour former des coudes à 180°, facilite sa mise en tension par éloignement des barrettes, permet un positionnement précis du faisceau de portions rectilignes de fil, afin que le faisceau épouse une surface médiane s'étendant à mi-distance entre les faces avant et arrière du panneau, en particulier une surface médiane incurvée ou vrillée, par exemple en prévoyant des peignes de guidage supplémentaires disposés entre les peignes d'extrémité ; le fil oppose en outre peu de résistance à la progression du flux de matière pâteuse (béton de résine) lors de son introduction dans le moule ; ceci permet d'obtenir un remplissage rapide, complet et homogène de la cavité du moule par le béton de résine.

La gaine favorise le glissement du fil par rapport au panneau fini et par rapport aux barrettes supports de fil, diminue les contraintes mécaniques dans le fil, facilite la mise en tension homogène du fil, et joue un rôle d'isolant électrique.

Les supports allongés (barrettes ou peignes) peuvent être moulés à partir d'une composition de formulation identique ou très proche de celle utilisée pour la fabrication des panneaux : on diminue ainsi les problèmes de dilatation thermique différentielle au sein du panneau et ceux pouvant résulter d'une différence de conductivité thermique.

Selon un mode de réalisation de l'invention, une partie des moyens de support et de positionnement de l'élément chauffant dans le moule qui restent noyés à l'intérieur du panneau après moulage, sert à la fixation d'accessoires sur le panneau ; de préférence, le panneau est fixé à un support par des moyens autorisant un déplacement relatif des points d'attache intégrés au panneau, sous l'effet de la dilatation du panneau qui peut être de l'ordre de plusieurs millimètres pour un panneau de deux mètres de longueur.

Selon un autre aspect, l'invention propose un panneau chauffant comportant un élément chauffant intégré ; l'élément chauffant et au moins un support de cet élément qui sont positionnés dans la cavité du moule avant injection, sont noyés à l'intérieur du panneau ; le positionnement de l'élément chauffant en partie centrale ou médiane du corps du panneau est ainsi assuré très simplement et permet d'obtenir un panneau qui, après démoulage, nécessite très peu d'opérations de finition, telles que des opération d'ébavurage, tout en permettant d'assurer un aspect esthétique optimal ; l'élément chauffant et son support n'étant pas proéminents et de préférence non affleurants, (à l'exception de petits appendices de fixation) ;de préférence, un ou plusieurs détecteurs de surchauffe et un boîtier de raccordement électrique sont également positionnés et/ou suspendus dans le moule avant injection, de sorte qu'ils sont également noyés dans la structure moulée du panneau on obtient ainsi, en sortie du moule, un panneau nécessitant très peu d'opérations supplémentaires de fabrication.

Les caractéristiques de l'invention sont particulièrement adaptées à l'obtention de panneaux chauffants d'environ 20 mm d'épaisseur, de surface frontale allant de 0,2 à 1 m², dissipant une puissance de l'ordre de 1500 watts/m², de forme profilée et incurvée, qui peuvent être teintés dans la masse ou bien dans la peau ("gel coat") et/ou par application d'un revêtement de finition.

D'autres caractéristiques et avantages apparaissent dans la description suivante qui se réfère aux dessins annexés, qui illustrent sans aucun caractère limitatif des modes préférentiels de réalisation de l'invention.

La figure 1 illustre schématiquement, en vue de face un panneau chauffant conforme à l'invention, qui comporte deux tronçons de fil chauffant conformés en serpentin et deux baguettes supportant les éléments chauffants, et dont la face avant est dotée d'un contour rectangulaire ; la figure 1 est une vue selon I de la figure 2.

La figure 2, qui est une vue selon II de la figure 1, illustre en coupe transversale (dans un plan vertical) schématique, le panneau de la figure 1 accroché à une paroi verticale par deux supports.

La figure 3 qui est une vue selon III de la figure 1, illustre schématiquement en coupe transversale dans un plan horizontal le panneau de la figure 1.

Les figures 4 et 5 sont respectivement des vues de face selon IV-IV et V-V des supports supérieur et inférieur de suspension de panneau de la figure 2.

La figure 6 illustre schématiquement les principaux composants d'un dispositif pour la fabrication de panneaux conformes à l'invention.

La figure 7 illustre en vue en coupe transversale de façon similaire à la figure 3, un autre mode de réalisation de panneau conforme à l'invention.

Les figures 8 et 11 illustrent respectivement en vue en plan et en vue de profil une barrette support de fil chauffant équipant le panneau illustré figure 7 ; les figures 9 et 10 sont des vues en coupe selon IX-IX et X-X respectivement, de la figure 8 à échelle agrandie, et illustrent les moyens de solidarisation du support de fil chauffant à une paroi d'un moule, et les moyens de traction pour mise en tension des éléments chauffants.

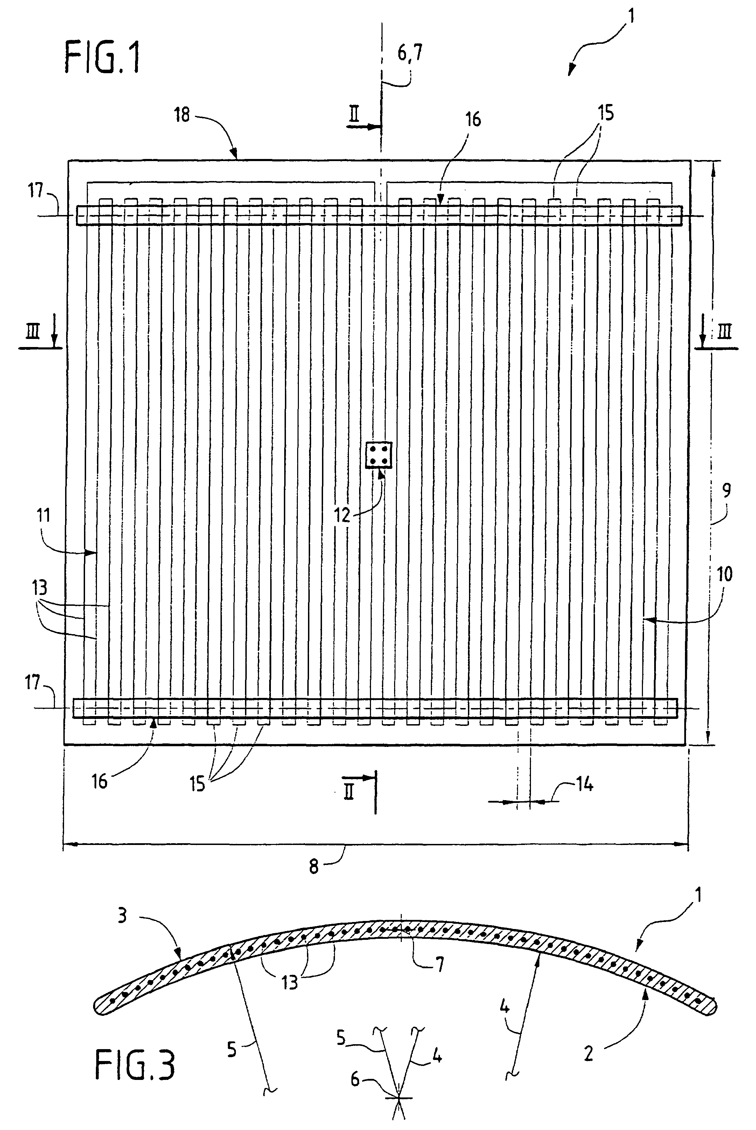

Par référence aux figures 1 à 3 en particulier, le panneau 1 comporte une face avant 2 et une face arrière 3 qui épousent une portion de cylindre de rayon respectif 4,5 voisin de un mètre, d'axe 6 parallèle à l'axe 7 dit axe longitudinal du panneau.

Le panneau en forme de plaque ou coque conformée en portion de tube cylindrique d'axe 6, est en vue de face (fig.1) de forme sensiblement carrée de largeur 8 et de hauteur 9 voisine de 700 mm, et est susceptible de dissiper par effet Joule une puissance de 800 Watts ; il inclut à cet effet deux tronçons 10, 11 de fil électriquement résistif, dont les extrémités sont logées dans un boîtier 12 noyé dans le corps moulé (d'épaisseur 13 égale à 20 mm) du panneau.

Chaque tronçon de fil 10, 11, de 0,4 mm de diamètre (1,5 mm gaine comprise) et de longueur voisine de 15 m, comporte une pluralité de portions rectilignes 13 parallèles à l'axe 7, espacées d'un pas 14 voisin de 15 mm, et reliées par des portions d'extrémité 15 coudées à 180°.

Le panneau 1 inclut deux barres 16 allongées selon un axe 17 perpendiculaire à l'axe 7 du panneau ces barres ou barrettes 16 s'étendent le long et à proximité immédiate (quelques millimètres)des extrémités longitudinales 18 formant les bords supérieur et inférieur du panneau, sont noyées dans celui-ci, et servent à disposer et à tendre les éléments chauffants dans le moule avant l'introduction de la composition de moulage.

Ainsi, les fils s'étendent sensiblement à égale distance 19 des faces avant 2 et arrière 3.

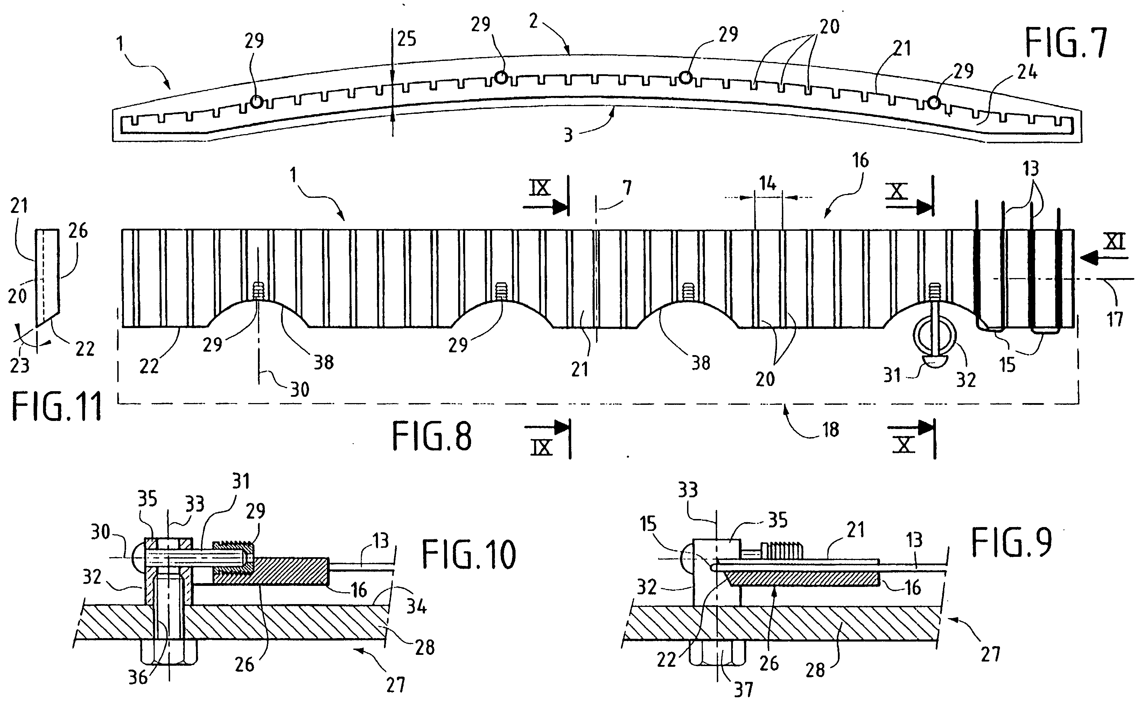

A cet effet, la barrette 16 comporte (voir fig. 7 à 11) une pluralité de rainures 20 régulièrement espacées selon ledit pas 14, qui s'étendent perpendiculairement à l'axe longitudinal 17 de la barrette, et sont creusées sur une face 21 de celle-ci ; deux portions rectilignes 13 adjacentes du tronçon de fil sont engagées par leur extrémité dans deux rainures 20 adjacentes de la barrette, et la portion 15 coudée reliant les portions 13 s'étend au contact d'une face longitudinale 22 de la barrette, qui forme avec la face d'appui 21 munie des rainures 20, un angle 23 de préférence inférieur à 90°, en particulier de l'ordre de 30 à 60°, de manière à favoriser l'engagement des extrémités des portions 13 au fond des rainures 20 et à éviter leur dégagement ultérieur intempestif.

La portion de barrette 24 s'étendant entre deux rainures 20 adjacentes forme ainsi une butée sur laquelle s'appuie la portion 15 coudée.

La barrette 16 d'épaisseur 25 sensiblement constante et de section trapézoïdale (fig. 11) est munie d'un profil longitudinal qui épouse sensiblement (fig. 7) le profil des faces avant 2 et arrière 3 ; l'épaisseur 25 est voisine de (ou inférieure à) la demi-épaisseur 19 du panneau, de manière à ce que les rainures 20 s'étendent sensiblement dans un plan ou selon une surface courbe équidistant(e) des faces avant et arrière, sans que la face 26 opposée à la face 21 de la barrette ne soit proéminente, ni de préférence affleurante.

Par référence aux figures 8 à 10 particulièrement, les moyens de fixation de chaque barrette 16 à la paroi 28 du moule 27 comportent :
- quatre manchons 29 taraudés, d'axe 30 parallèle à l'axe 7, solidaires de la barrette,
- quatre vis 31 respectivement vissées dans chaque manchon 29,
- quatre douilles métalliques 32 taraudées, d'axe 33 perpendiculaire à la face interne 34 de la paroi 28 du moule ; chaque douille 32 est fendue diamétralement en partie supérieure 35 pour recevoir la partie filetée d'une vis 31.

La paroi 28 est percée de quatre trous 36 au travers de chacun desquels s'étend une vis 37 permettant de fixer au moule, le temps nécessaire au moulage, le dispositif de maintien et de tension du fil ; à cet effet, la vis 37 solidarise la douille 32 à la paroi 28 ; la vis 31 engagée dans la fente de la douille 32 et dont la base de la tête s'appuie sur la face externe de celle-ci, supporte la barrette 16 par l'intermédiaire du manchon 29, qui est de préférence surmoulé dans le corps de la barrette et disposé saillant à la surface 21 de celle-ci, pour améliorer sa stabilité lors de la traction effectuée sur les tronçons de fils ; ceux-ci, dont les extrémités ont été préalablement solidarisées à une paroi du moule, sont tendus en exerçant une traction sur les barrettes, qui tend à écarter les barrettes l'une de l'autre ; cette traction est effectuée en vissant la vis 31, ce qui tend à rapprocher le manchon 29 de la douille 32 ; à cet effet les moyens 29, 31, 32 de fixation et de mise en tension sont disposés entre chaque barrette 16 et le bord 18 du panneau respectif.

Selon une alternative non représentée, l'écartement des barrettes 16 peut être obtenu par une poussée sur leur face longitudinale "interne" opposée à la face 22.

Selon une variante (non représentée), l'écartement des barrettes 16 peut être obtenu par déplacement des vis 37 parallèlement à l'axe 7, grâce à des orifices 36 oblongs, par exemple en forme de fentes prévues dans la paroi 28 et munies de dispositifs d'étanchéité à la composition de moulage ; ceci peut faciliter la mécanisation de l'écartement des barrettes par un actionneur (tel qu'un vérin) externe à la cavité du moulage ; dans ce cas il peut être prévu une fixation directe de la vis 37 à la barrette.

Afin que les extrémités des tronçons 13 de fil s'étendent au plus près de ce bord 18, les barrettes sont munies de quatre échancrures ou renfoncements 38 le long de leur face longitudinale latérale 22.

Après démoulage du panneau, ces moyens 29, 31, 32 restent noyés dans le panneau et l'extrémité de la douille 32 reste affleurante sur la face arrière 3 du panneau et peut servir de point d'ancrage d'un accessoire.

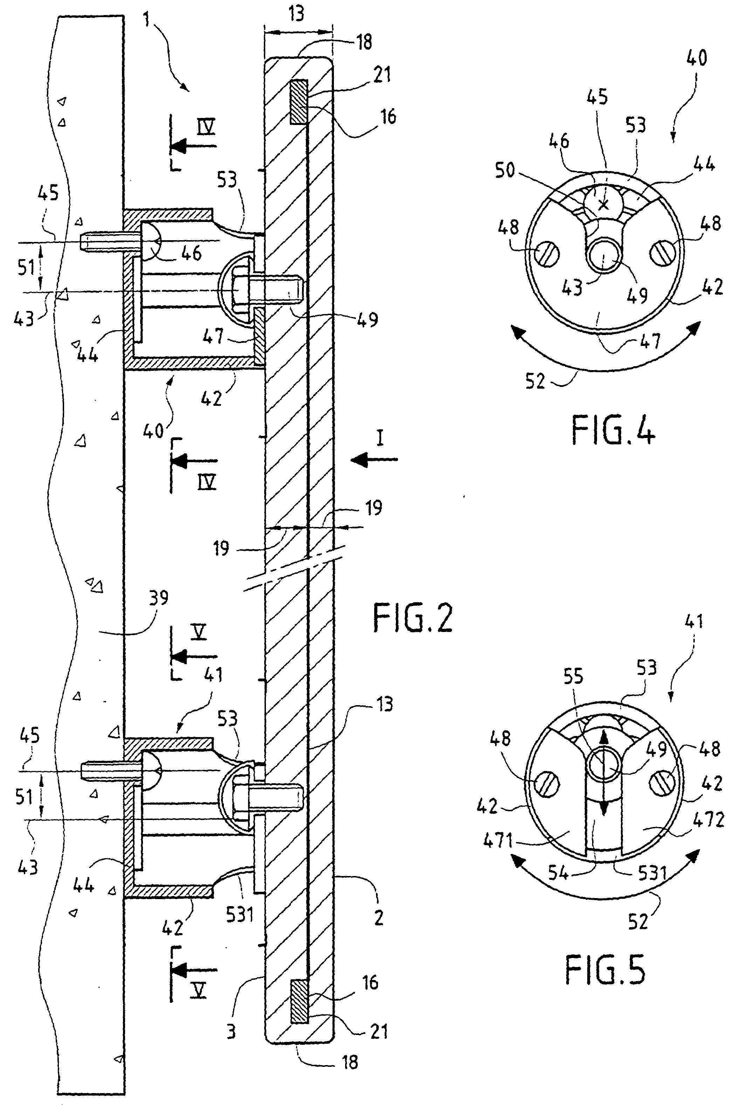

La fixation du panneau 1 au mur 39 est réalisée par deux supports supérieurs 40 et au moins un support inférieur 41 illustrés figures 2, 4 et 5 en particulier.

Le support supérieur 40 comporte un corps tubulaire 42 d'axe 43, obturé à une première extrémité par un fond 44 en forme de disque percé d'un orifice d'axe 45 pour la fixation du support 40 au mur 39 par une vis 46 ; la deuxième extrémité longitudinale du corps tubulaire 42 est en partie obturé par un couvercle 47 fixé au corps 42 par deux vis 48 ; une vis 49 est fixée dans la face arrière 3 du panneau 1 par l'intermédiaire d'un insert (non représenté) ; une échancrure 50 est prévue dans le couvercle 47, symétrique par rapport à un plan vertical et s'étendant jusque sous l'axe 43 du boîtier tubulaire 40, de sorte que la vis 49 fixée au panneau peut s'étendre selon l'axe 43 du corps tubulaire 42, et peut supporter, dans cette position en appui au fond de l'échancrure 50, le panneau 1 ; cette structure de support permet, grâce à la distance 51 séparant les axes 43 et 45, d'orienter selon la flèche 52 le support 40 par pivotement selon l'axe 45, afin de compenser un défaut dans l'entraxe de perçage entre deux supports 40 supérieurs.

Une ouverture ou échancrure 53 est prévue dans la partie supérieure du corps tubulaire 42 en regard de l'échancrure 50, pour faciliter le serrage de la vis 49.

La structure et la fonction du support inférieur 41 sont similaires de celles du support 40 ; cependant, afin de permettre un coulissement en translation (par exemple verticale) selon la flèche 55 de la vis d'ancrage 49 sous l'effet notamment de la dilatation thermique du panneau 1, le couvercle du support 41 est prévu en deux parties symétriques 471, 472 qui délimitent une gorge ou rainure 54 à l'intérieur et/ou le long de laquelle peut coulisser la vis 49 fixée au panneau 1 ; par ailleurs le corps tubulaire 42 est muni d'une échancrure supplémentaire 531 en partie inférieure.

En variante, les parties 471, 472 sont reliées entre elles pour former une échancrure (telle que 50 pour le support 40) plus allongée permettant le coulissement de la vis 49 lors de la dilation du panneau.

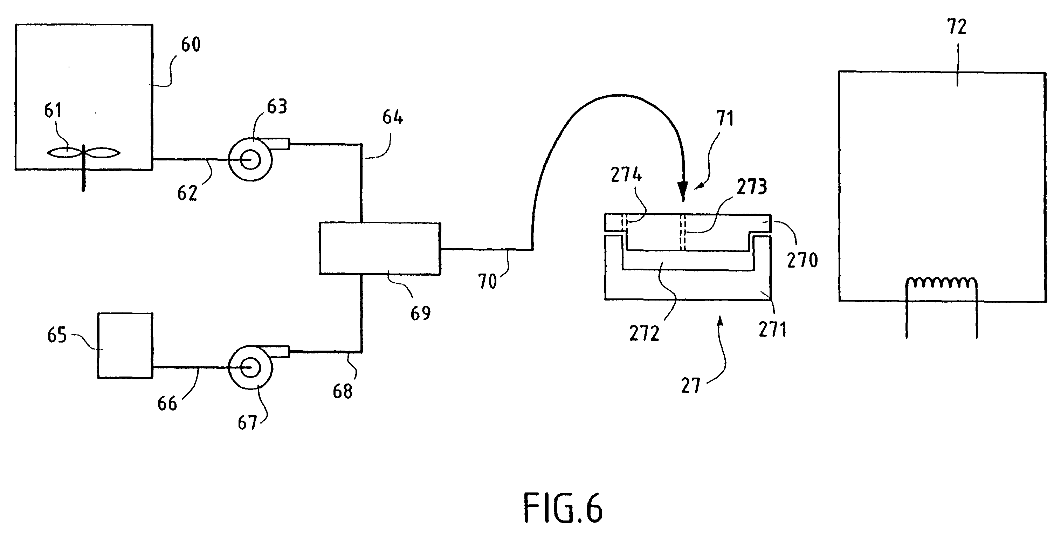

Par référence à la figure 6, le dispositif permettant la fabrication d'un panneau selon l'invention comporte :
- un réservoir 60 apte à recevoir un mélange de résine et de poudre minérale, muni de moyens 61 d'agitation et, le cas échéant, de moyens de maintien du contenu du réservoir à une température déterminée,
- un ou plusieurs réservoirs 65 aptes à contenir des produits catalyseurs, adjuvants et colorants notamment,
- un compartiment 69 de mélange des produits issus des réservoirs 60, 65 et transportés par des conduits 62, 64 et 66, 68 sous l'action respective de moyens 63, 67 de pompage,
- une canalisation 70 d'injection raccordée à la sortie du mélangeur 69 et terminée par un organe 71 d'injection dans le moule,
- un moule 27 comportant une partie mâle 270 et une partie femelle 271 qui délimitent une cavité 272 de moulage de forme et dimensions correspondant au panneau à fabriquer, une partie 270 du moule étant munie d'un orifice (ou conduit) 273 de passage de la composition de moulage, et d'évents 274,
- d'une étuve 72.

Exemple de réalisation d'un panneau conforme aux figures 1 à 3 :
- on introduit dans le réservoir 60 kilos de résine de polyester insaturé à base d'acide maléique, et 300 kilos de poudre de carbonate de calcium dont la granulométrie moyenne est de 80 microns,
- on agite le mélange contenu dans le réservoir 60 et on introduit dans le réservoir 65 le catalyseur,
- on dispose et on fixe des barrettes supports de fil, et on dispose et on tend le fil à l'intérieur de la cavité du moule,
- on applique par pulvérisation sur le poinçon et la matrice, un gel-coat polyester teinté,
- on actionne les pompes 62, 67 et on injecte à une pression de 2,5 10⁵ Pascal, dans la cavité 272 du moule, 20 kg du mélange provenant des réservoirs 60, 65,
- on maintient la composition dans la cavité à une température de 25°C pendant 10 minutes,
- on ouvre le moule, on sort le panneau, on l'ébavure, et on l'introduit dans l'étuve 72 ;
- on sort le panneau de l'étuve après 10 heures et on applique sur sa surface externe un revêtement coloré de 50 microns d'épaisseur.

## Revendications

1. Procédé de fabrication par moulage d'un panneau chauffant dans lequel :
- on dispose à l'intérieur d'un moule (27) comportant deux parties (270, 271) aptes à délimiter une cavité (272) de moulage, un élément chauffant (10, 11),
- on introduit dans le moule une composition essentiellement constituée d'un mélange d'une résine thermodurcissable, un catalyseur ou durcisseur de polymérisation et d'une charge minérale sous forme de poudre,
procédé **caractérisé en ce que** :
- avant fermeture du moule et introduction de la composition, on tend l'élément chauffant de façon à ce qu'il ne soit pas en contact avec les parois du moule et qu'il ne se déforme ni ne se déplace lors du moulage
- et **en ce que** le moulage est réalisé par injection, à une pression inférieure à 10⁶ Pascal.

2. Procédé selon la revendication 1 dans lequel la proportion en masse de la résine dans la composition est située dans une plage allant de 10 à 50 %, et dans lequel la proportion en masse de la poudre minérale dans la composition est supérieure à 50 % et inférieure à 90 %.

3. Procédé selon la revendication 1 ou 2 dans lequel on applique un gel-coat sur le poinçon (270) et sur la matrice (271) avant de disposer l'élément chauffant dans le moule, et dans lequel la polymérisation de la résine est effectuée avec chauffage du moule.

4. Procédé selon l'une quelconque des revendications 1 à 3 dans lequel la tension de l'élément chauffant est obtenue par déplacement d'un support (16) de l'élément (10, 11), lequel support (16) est disposé dans le moule, par un actionneur intérieur à la cavité (272) du moule.

5. Procédé selon l'une quelconque des revendications 1 à 4, dans lequel on utilise un ou plusieurs tronçon(s) de fil électriquement conducteur, de diamètre choisi dans une plage allant de 0,1 à 0,8 mm, pour constituer l'élément chauffant.

6. Procédé selon l'une quelconque des revendications 1 à 5, dans lequel la proportion en masse de la résine dans la composition est située dans une plage allant de 10 à 50% en masse, et dans lequel la température de vitrification de la résine s'étend dans une plage allant de 120 à 160°C.

7. Procédé selon l'une quelconque des revendications 1 à 6, dans laquelle la poudre est constituée de particules de calcaire ou de carbonate de calcium, dont la dimension moyenne est située dans une plage allant de 10 à 100 microns, et dans lequel la proportion en masse de la poudre dans la composition est supérieure à 50 % et inférieure à 90 %.

8. Dispositif de fabrication par injection sous pression d'un panneau (1) chauffant pouvant être obtenu par le procédé selon l'une des revendications 1 à 7 et comportant un élément (10, 11) chauffant et un support (16) de cet élément qui sont noyés dans le panneau (1), **caractérisé en ce qu'**il comporte :
- un moule (27) comportant des parois (28) délimitant une cavité (272) de moulage,
- un organe tel qu'un vérin de déplacement du support (16) pour la mise en tension de l'élément chauffant, qui est disposé à l'intérieur de la cavité (272).

9. Panneau (1) chauffant moulé pouvant être obtenu par le procédé selon l'une des revendications 1 à 7 et comportant un élément (10, 11) chauffant et un support (16) d'élément chauffant qui sont noyés à l'intérieur du panneau, **caractérisé en ce qu'**il comporte un moyen (29, 31) tel qu'une vis (31) coopérant avec un insert (29), pour le déplacement du support (16) et la mise en tension de l'élément (10, 11), lequel moyen de déplacement est intégré au panneau.

10. Panneau selon la revendication 9, dans lequel le support (16) comporte plusieurs organes (20) de positionnement de l'élément (10, 11), de sorte que la mise en tension de l'élément (10, 11) est facilitée.

11. Panneau selon la revendication 9 ou 10 qui est de forme gauche.

12. Panneau selon l'une quelconque des revendications 9 à 11 qui comporte deux supports (16) allongés d'élément chauffant disposés à deux extrémités (18) opposées du panneau.

13. Panneau selon la revendication 12 dans lequel chaque support (16) est en forme de barrette munie d'une pluralité d'encoches (20) régulièrement espacées, et dont le profil longitudinal épouse le profil d'au moins une face du panneau.

14. Panneau selon l'une quelconque des revendications 9 à 13 dans lequel le(s) support(s) (16) est (sont) obtenu(s) par moulage d'une composition sensiblement identique à celle du panneau.

15. Kit comportant un panneau selon l'une quelconque des revendications 9 à 14, et des moyens de fixation (40, 41) du panneau à un support tel qu'un mur (39) qui autorisent un déplacement relatif d'un point d'attache du panneau par rapport au point d'attache du mur.

## Patentansprüche

1. Verfahren zur Herstellung einer Heizplatte durch Formguss, bei dem:
- ein Heizelement (10, 11) im Inneren einer Gussform (27) angeordnet wird, die zwei Teile (270, 271) umfasst, die einen Gusshohlraum (272) begrenzen können,
- in die Gussform eine Zusammensetzung eingeleitet wird, die im Wesentlichen von einer Mischung eines duroplastischen Harzes, eines Katalysators oder eines Polymerisationshärters und einem mineralischen Füllstoff in Pulverform gebildet ist,
welches Verfahren **dadurch gekennzeichnet ist, dass**:
- vor dem Schließen der Gussform und der Einleitung der Zusammensetzung das Heizelement derart gespannt wird, dass es nicht mit den Wänden der Gussform in Kontakt steht und sich beim Formguss weder verformt noch verschiebt,
- der Formguss durch Einspritzen bei einem Druck von weniger als 10⁶ Pascal erfolgt.

2. Verfahren nach Anspruch 1, bei dem der Masseanteil des Harzes in der Zusammensetzung in einem Bereich von 10 bis 50 % liegt und bei dem der Masseanteil des Mineralpulvers in der Zusammensetzung größer als 50 % und geringer als 90 % ist.

3. Verfahren nach Anspruch 1 oder 2, bei dem ein Gel-Coat auf den Stempel (270) und auf die Matrize (271) aufgebracht wird, bevor das Heizelement in der Gussform angeordnet wird, und bei dem die Polymerisation des Harzes vor der Erhitzung der Gussform erfolgt.

4. Verfahren nach einem der Ansprüche 1 bis 3, bei dem die Spannung des Heizelements durch Verschiebung eines Trägers (16) des Elements (10, 11), wobei der Träger (16) in der Gussform angeordnet ist, durch ein Betätigungselement im Inneren des Hohlraums (272) der Gussform erzielt wird.

5. Verfahren nach einem der Ansprüche 1 bis 4, bei dem ein oder mehrere elektrisch leitende Drahtstücke mit einem Durchmesser verwendet werden, der in einem Bereich von 0,1 bis 0,8 mm ausgewählt wird, um das Heizelement zu bilden.

6. Verfahren nach einem der Ansprüche 1 bis 5, bei dem der Masseanteil des Harzes in der Zusammensetzung in einem Bereich von 10 bis 50 Masse-% liegt, und bei dem die Verglasungstemperatur des Harzes in einem Bereich von 120 bis 160 °C liegt.

7. Verfahren nach einem der Ansprüche 1 bis 6, bei dem das Pulver von Kalk- oder Calciumkarbonatteilchen gebildet ist, deren durchschnittliche Abmessung in einem Bereich von 10 bis 100 Mikrometer liegt, und bei dem der Masseanteil des Pulvers in der Zusammensetzung größer als 50 % und geringer als 90 % ist.

8. Vorrichtung zur Herstellung einer Heizplatte (1) durch Einspritzen unter Druck, die durch das Verfahren nach einem der Ansprüche 1 bis 7 erhalten werden kann und ein Heizelement (10, 11) und einen Träger (16) für dieses Element umfasst, die in die Platte (1) eingelassen sind,
**dadurch gekennzeichnet, dass** sie umfasst:
- eine Gussform (27), die Wände (28) umfasst, die einen Formhohlraum (272) begrenzen,
- ein Element, wie beispielsweise einen Zylinder zum Verschieben der Stütze (16) für die Unterspannungsetzung des Heizelements, das im Inneren des Hohlraums (272) angeordnet ist.

9. Durch Formguss hergestellte Heizplatte (1), die durch das Verfahren nach einem der Ansprüche 1 bis 7 hergestellt werden kann und ein Heizelement (10, 11) und einen Träger (16) für das Heizelement umfasst, die in das Innere der Platte eingelassen sind, **dadurch gekennzeichnet, dass** sie ein Mittel (29, 31), wie beispielsweise eine Schraube (31) umfasst, das mit einem Einsatz (29) zusammenwirkt, um den Träger (16) zu verschieben und das Element (10, 11) unter Spannung zu setzen, wobei das Verschiebemittel in die Platte integriert ist.

10. Platte nach Anspruch 9, bei dem der Träger (16) mehrere Elemente (20) zur Positionierung des Elements (10, 11) umfasst, so dass die Unterspannungsetzung des Elements (10, 11) vereinfacht wird.

11. Platte nach Anspruch 9 oder 10, die eine schiefe Form aufweist.

12. Platte nach einem der Ansprüche 9 bis 11, die zwei längliche Träger (16) für das Heizelement umfasst, die an zwei gegenüber liegenden Enden (18) der Platte angeordnet sind.

13. Platte nach Anspruch 12, bei der jeder Träger (16) die Form eines Stegs aufweist, der mit einer Vielzahl von Kerben (20) in regelmäßigen Abständen versehen ist und dessen Längsprofil sich an das Profil von mindestens einer Seite der Platte anlegt.

14. Platte nach einem der Ansprüche 9 bis 13, bei der der (die) Träger (16) durch Formguss einer im Wesentlichen mit jener der Platte identischen Zusammensetzung erhalten wird (werden).

15. Bausatz, umfassend eine Platte nach einem der Ansprüche 9 bis 14 und Mittel zur Befestigung (40, 41) der Platte an einem Träger, wie beispielsweise einer Mauer (39), die eine relative Verschiebung eines Befestigungspunktes der Platte in Bezug auf den Befestigungspunkt der Mauer gestatten.

## Claims

1. A method of manufacturing a heater panel by molding, the method comprising the steps of:
· placing a heater element (10, 11) inside a mold (27) comprising two portions (270, 271) suitable for defining a mold cavity (272);
· introducing a composition into the mold, the composition being essentially constituted by a mixture of thermosetting resin, a catalyst or polymerization hardener, and a mineral fill in powder form,
the method being **characterized in that**:
· prior to closing the mold and introducing the composition, the heater element is tensioned so that it does not come into contact with the walls of the mold and so that it does not deform or move during molding;
· and **in that** molding is performed by injecting at a pressure of less than 10⁻⁶ pascals.

2. A method according to claim 1, in which the proportion by weight of resin in the composition lies in a range 10% to 50%, and in which the proportion by weight of mineral powder in the composition is greater than 50% and less than 90%.

3. A method according to claim 1 or claim 2, in which a gel coat is applied on the punch (270) and on the die (271) prior to placing the heater element in the mold, and in which the resin is polymerized by heating the mold.

4. A method according to any one of claims 1 to 3, in which the tension in the heater element is obtained by moving a support (16) of the element (10, 11) by means of an actuator inside the mold cavity (272), said support (16) being placed inside the mold.

5. A method according to any one of claims 1 to 4, in which the heater element is made of one or more segments of electrically conductive wire of diameter selected to lie in the range 0.1 millimeters (mm) to 0.8 mm.

6. A method according to any one of claims 1 to 5, in which the proportion by weight of resin in the composition is situated in a range 10% to 50% by weight, and in which the vitrification temperature of the resin lies in a range 120°C to 160°C.

7. A method according to any one of claims 1 to 6, in which the powder is constituted by particles of limestone or calcium carbonate, of mean dimension situated in a range 10 micrometers (µm) to 100 µm, and in which the proportion by weight of powder in the composition is greater than 50% and less than 90%.

8. Apparatus for manufacturing a heater panel (1) by injection under pressure by implementing the method according to any one of claims 1 to 7 and including a heater element (10, 11) and a support (16) for said element, which are embedded in the panel (1), the apparatus being **characterized in that** it comprises:
· a mold (27) having walls (28) defining a mold cavity (272); and
· a member such as an actuator for moving the support (16) to tension the heater element, which member is located inside the cavity (272).

9. A molded heater panel (1) suitable for being obtained by the method according to any one of claims 1 to 7 and comprising a heater element (10, 11) and a heater element support (16) which are embedded inside the panel, the panel being **characterized in that** it includes means (29, 31) such as a screw (31) co-operating with an insert (29) to move the support (16) and put the element (10, 11) under tension, which displacement means is integrated in the panel.

10. A panel according to claim 9, in which the support (16) has a plurality of members (20) for positioning the element (10, 11) so that tensioning of the element (10, 11) is made easier.

11. A panel according to claim 9 or claim 10, which is not flat in shape.

12. A panel according any one of claims 9 to 11 having two elongate supports (16) for the heater element disposed at two opposite ends (18) of the panel.

13. A panel according to claim 12, in which each support (16) is in the form of a strip provided with a plurality of regularly spaced-apart notches (20) and of longitudinal profile that matches the profile of at least one face of the panel.

14. A panel according to any one of claims 9 to 13, in which the or each support (16) is obtained by molding a composition substantially identical to that of the panel.

15. A kit comprising a panel according to any one of claims 9 to 14 and means (40, 41) for fixing the panel to a support such as a wall (39) enabling relative displacement between a panel attachment point and a wall attachment point.
